# EUROPÄISCHE PATENTANMELDUNG

(11) **EP 1 640 879 A1**
(43) Veröffentlichungstag der Anmeldung: **29.03.2006**
(21) Anmeldenummer: 04104735.8
(22) Anmeldetag: 28.09.2004
(51) Int. Cl.: G06F 17/30

(54) **Verfahren und Mittel zur Suche von Aufnahmedaten in einer Datenbank**

(71) Anmelder: Swisscom Mobile AG, 3050 Bern (CH)
(72) Erfinder: Lauper, Eric, 3014 Bern (CH)
(74) Vertreter: P&TS Patents & Technology Surveys SA

(57) **Zusammenfassung**

Es werden ein Verfahren und Mittel zur Suche von Aufnahmedaten in einer Datenbank beschrieben. Dabei wird beispielsweise für einen Benutzer eines Mobiltelefons mit integrierter Digitalkamera anhand von einem ersten Digitalbild eine Suche über ein Mobilfunknetz nach weiteren Bildern anderer Benutzer in der Datenbank gewährleistet. An die Digitalbilder werden Metadateien angehängt, deren Metadaten u.a. räumliche, zeitliche, usw. Informationen über die Aufnahme enthalten. Bei Teilkorrelation zwischen Metadaten des ersten Digitalbildes mit Metadaten der weiteren Bilder der Datenbank werden die Bilder aus der Datenbank über das Mobilfunknetz dem Wiedergabegerät des Mobiltelefons zugeführt und angezeigt.

## Beschreibung

Die Erfindung betrifft ein Verfahren und Mittel zur Suche von Aufnahmedaten in einer Datenbank gemäss den Oberbegriffen der Patentansprüche 1, 20 und 24.

Heutzutage werden die Speichermedien immer höhere Kapazitäten aufweisen, derart dass ein Benutzer einer Datenbank viele aufgenommene Daten wie Bilder z.B. bei einem Dienstanbieter von Datenbanken lagern und später wieder suchen oder sortieren kann. Zur Auswahl einiger Bilder (beispielsweise bei einer Suche nach Kameraaufnahmen eines bestimmten Gegenstandes) werden weiterhin den Daten angehängte Metadateien zur Identifizierung eines Bildes nach Namen, Zeit, etc. verwendet. Die Metadatei wird entweder bei der Kameraaufnahme (meistens automatisch) eingestellt oder kann nachträglich vom Benutzer in einen Speicherort (z.B. PC-Festplatte, Datenbank) eingegeben werden.

In diesem Sinn können gegenstands-orientierte Suchen nach Bildern durchgeführt werden. Dieser Aspekt wird in US20040073578 ausführlich beschrieben und ermöglicht ferner, anhand eines Positionssensors wie eines GPS eine Lokalisierung der Aufnahmen und eine räumliche Zusammensetzung mehrerer aufgenommener Bildern. Damit können Stereobilder sowie geographische Aufnahmen erzeugt werden. Hierbei besteht die Metadatei der Bilder aus einer räumlichen Information, die anhand eines GPS-Systems (Navigationssystem) in Verbindung mit einer Kamera und deren Orientierung ermittelt wird.

Aus JP2003323440 sind Aufnahmen aus einer Handy-Kamera eines Benutzers bekannt, bei denen der Benutzerstandort und die Entfernung der Kamera zum aufgenommenen Gegenstand ermittelt werden. Anschliessend werden die Aufnahmedaten in einer Ferndatenbank abgelegt.

Als weiterer Aspekt der Metadatei nach einem privaten (anstelle von einem räumlichen) Kriterium ist ebenfalls eine Suche oder eine Teilung von aufgenommenen Bildern über Peer-Netzelemente aus US6229100 bekannt.

Bisher sind aber von unterschiedlichen Benutzern aufgenommene Bilder in einer Datenbank aufgrund verschiedener Arten von Metadateien nicht einfach zu verbinden.

Die Aufgabe der Erfindung besteht nun darin, ein Verfahren und Mittel anzugeben, welche eine möglichst gute Suche nach Aufnahmendaten in einer Datenbank anhand eines Mobilgeräts eines Benutzers gewährleisten.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch ein System und eine Mobilkommunikationsvorrichtung mit den Merkmalen der Patentansprüche 20 und 24.

Vorteilhafte Weiterentwicklungen der Erfindung sind in den Unteransprüchen angegeben.

Ausgehend von einem Verfahren zur Suche von digitalen Aufnahmedaten, vorzugsweise Kamerabildern, in einer Datenbank,
wobei Aufnahmedaten von einer Vielzahl von Benutzern über ein Telekommunikationsnetz in die benannte Datenbank abgelegt werden,
wobei mindestens gewisse Aufnahmedaten mit Mobilaufnahmegeräten aufgenommen werden,
wobei in der Datenbank Metadaten mindestens zu gewissen Aufnahmedaten von Benutzern zugewiesen sind,
wobei die Metadaten eine automatisch ermittelte Standortinformation enthalten,
wird erfindungsgemäss mittels eines Mobilaufnahmegeräts eine Standortinformation als Suchkriterium von einem ersten Benutzer für die Suche von Aufnahmedaten unterschiedlicher Benutzer in der Datenbank verwendet. Dabei wird die benannte Standortinformation meistens den Standort des benannten Mobilaufnahmegeräts des ersten Benutzers angeben.

Eine Korrelation von Metadaten des ersten Benutzers und weiterer Benutzer entsteht z.B. für mehrere sich annähernde Aufnahmen eines gemeinsamen Gegenstandes, die auch teilweise mittels Aufnahmegeräten (wie Mobilaufnahmegeräten) unterschiedlicher Benutzer gemacht wurden/werden.

Als Metadaten werden hauptsächlich Standort-basierte Informationen (Ort der Kamera, Ort des aufgenommen Gegenstands, Umkreis um einen gewünschten Ort, Strassennummer, etc.) meistens automatisch vom Aufnahmegerät erzeugt, jedoch können beliebige andere Informationen (z.B. manuell vom Benutzer selber) hinzugefügt werden. Dabei können ein Name, eine Benutzergruppe, eine Farbeigenschaft, ein Datum, eine Zeit usw. ebenfalls weitere Metadaten bilden.

Im Folgenden wird mit "Metadatei" eine Datei mit zusammengefassten Daten und Metadaten gemeint.

Der Benutzer eines Mobilaufnahmegeräts (z.B. eines Handys mit Kamera) kann also Zugriff auf weitere gewünschte Bilder in der Datenbank haben, die zu einem anderen Zeitpunkt von anderen Benutzern der Datenbank gespeichert wurden. Dafür wird nur eine Aufnahme gemacht und eine dazugehörige Metadatei erzeugt, die der Bildsuche in der Datenbank dient. Steht das Mobilaufnahmegerät in Verbindung mit einem Wiedergabegerät (was bei einem Handy mit Kamera und LCD-Display der Fall ist) können die aufgefundenen Bilder mit in der Datenbank teilkorrelierten Metadateien direkt dargestellt werden.

Eine Suche/Ablage von Aufnahmedaten aus einem Mobilaufnahmegerät in der Datenbank erfolgt über ein Kommunikationsnetzwerk (wie z.B. ein Mobilfunknetz). D.h. ein Kommunikationsnetzwerksbetreiber kann diesen Service z.B. über zusätzliche Gebühren mit der Telefonrechnung eines Benutzers verrechnen. Auch ein Betreiber der Datenbank (wenn dies nicht der Kommunikationsnetzwerksbetreiber ist) kann hinsichtlich Speichermenge und Verwaltungskosten Teil an dem Geschäft nehmen.

Ferner kann ein Benutzer anhand einer neuen Metadatei (z.B. bei einem noch unsichtbaren Ort) aus seinem Mobilaufnahmegerät nach einem oder mehreren aus der Datenbank stammenden Bildern suchen. Dies kann oft erwünscht sein, z. B. um sich mittels Mobilgerät zu erkundigen, wie die Strassenlage, das Wetter, usw. entlang einer geplanten Fahrstrecke ist/sein wird.

Ein Ausführungsbeispiel der Erfindung wird im Folgenden anhand der Zeichnung näher erläutert.

Dabei zeigt:

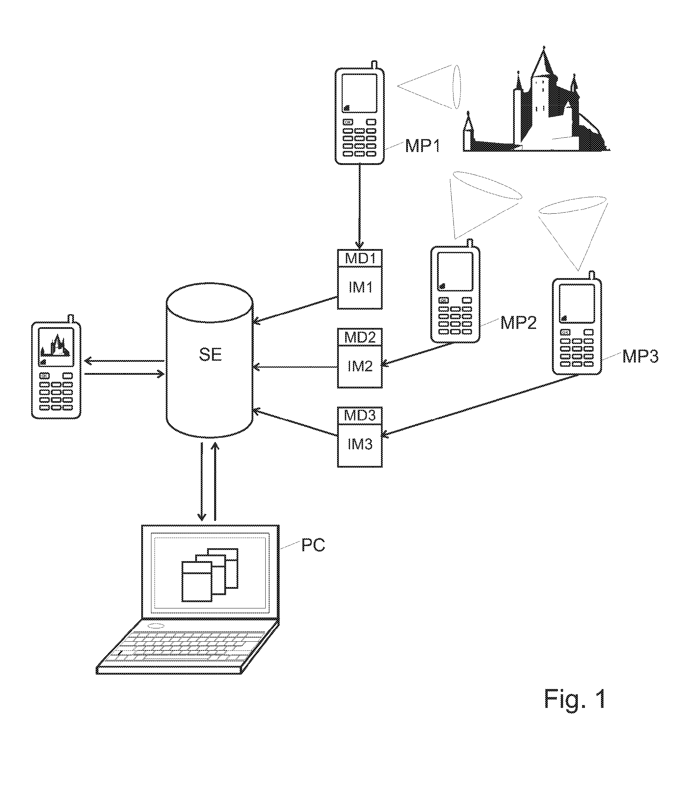

Fig. 1: schematische Darstellung eines Systems zur Anwendung des erfindungsgemässen Verfahrens.

In Figur 1 wird ein möglicher Durchführungsfall des Verfahrens dargestellt, wobei drei Benutzer mittels Mobilgeräten mit Aufnahmefunktionen, wie Mobiltelefonen MP1, MP2, MP3 mit einer Kamera, jeweils ein Digitalbild IM1, IM2, IM3 eines Gegenstandes (hier eines Schlosses) aufnehmen. Zusätzlich zu jedem Digitalbild IM1, IM2, IM3 wird eine Metadatei MD1, MD2, MD3 angehängt. Die Metadatei MD1, MD2, MD3 weist als einfache Metadaten räumliche Koordinatendaten und zeitliche Daten auf, die von einem Standortbestimmungsmittel wie einem GPS-System bzw. von einer Uhr der Mobiltelefone MP1, MP2, MP3 erzeugt wurden.

Gleichzeitig oder in einer nahen Zukunft werden die Digitalbilder IM1, IM2, IM3 mit ihrer Metadatei MD1, MD2, MD3 in einem gemeinsamen Server SE gespeichert. Auf dem Server SE kann z.B. eine herkömmliche Datenbank DB von einem Speicheranbieter wie einem Internet-Provider verwaltet werden. Der Speicheranbieter weist dem Gestalter der Datenbank einen (z.B. privaten) Speicherplatz kostenlos oder (einem herkömmlichen Kunden) gegen Gebühr zu.

Zur Übertragung und Ablage (upload) der Bilder IM1, IM2, 1M3 in die Datenbank können unterschiedliche Methoden verwendet werden, je nach dem welche Mittel dem Benutzer zur Verfügung stehen. Beispielsweise kann aus einem Navigator vom Mobilaufnahmegerät MP1, MP2, MP3 via Link auf eine Internetseite ein Bild und seine Metadatei in die Datenbank übertragen werden. Eine Alternative besteht darin, ein E-Mail aus dem vom Mobilaufnahmegerät MP1, MP2, MP3 mit Zieladresse des Servers SE zu erzeugen und als Beilage des E-Mail's das Bild IM1, IM2, IM3 und seine Metadatei MD1, MD2, MD3 anzuhängen. Auch mittels eines MMS aus dem Mobiltelefon MP1, MP2, MP3 kann ein Bild mit der Metadatei an die Telefonnummer des Servers SE übertragen und im Server SE gespeichert werden.

Eine weitere Möglichkeit des Uploads kann via Computer (wie beispielsweise ein PC) erfolgen. Z.B. aus einer Digitalkamera oder aus einem Mobiltelefon werden die Aufnahmedaten mit Metadateien via Bluetooth-, Infrarot-, USB- oder einer seriellen Schnittstelle eventuell in einer Zwischendatenbank (Festplatte des PCs oder eines Zwischenservers) gelagert bevor sie einen Upload in die Datenbank des Servers SE erfahren. Eine physikalische Übertragung der Speicherkarte zwischen der Digitalkamera und dem Computer ist auch möglich.

Nach Ablage der Digitalbilder IM1, IM2, IM3 mit ihren Metadaten MD1, MD2, MD3 im Server SE wird ein vierter Benutzer mittels eines Computers PC oder eines Mobilgeräts (wie eines Mobiltelefons MP4) nun mit einem Wiedergabemittel (wie ein LCD-Display) eine Recherche nach Bildern des Schlosses durchführen.

Zur Recherche von Bildern aus einem Computer PC oder eines Mobilgeräts MP4 anhand einer gewünschten Metadatei MD4 sind unterschiedliche Methoden vorstellbar. Einerseits kann der vierte Benutzer via einer Recherchen-Internet-Seite die Recherche direkt (z.B. mittels Textbegriffen) oder nach vordefinierten Suchfeldern veranlassen. Mit dem Mobilgerät ist ebenfalls eine Recherche auf einer WAP-Seite möglich. Ferner kann ein Recherchenauftrag auch per SMS oder E-Mail mittels eines Mobilgeräts oder eines Computers verschickt werden. Komplizierte Metadaten MD4 mit Standortinformationen, Zeitbereichen, Orientierungseigenschaften zwischen Gegenstand und Kamera, Entfernung, etc können auch direkt aus dem Mobiltelefon MP4 (sowie eventuell manuell) definiert werden. Sie werden also einen Upload bis zu einer Einheit COR zur Korrelation mit anderen Metadateien am Server SE erfahren. Das Upload der Metadatei MD4 erfolgt wie für ein bereits in den vorigen Absätzen erwähntes Upload eines Bildes. Wenn Metadaten MD4 auch auf Eigenschaften des entsprechenden Bildes IM4 hinweisen, können auch die Aufnahmedaten einen Upload erfahren, die auch als Recherchekriterien dienen können. Ein Upload für Metadaten mit Aufnahmedaten per MMS, E-Mail, FTP, WEB, usw. kann eingeleitet werden, falls z.B. den Aufnahmedaten IM4 sehr ähnliche Aufnahmedaten recherchiert werden.

Zur Recherche hinzu kann ein Identifizierungsbedarf auftreten, insbesondere im Sinne der Abrechung von Telefonkosten, falls der vierte Benutzer des Ausführungsbeispiels gemäss Figur 1 via Kommunikationsnetz GSM, GPRS, UMTS, HSCSD, Internet usw. seine Recherche aus dem Computer PC oder aus seinem Mobilgerät MP4 in der Datenbank DB durchführt. Dies kann z. B. mittels eines Passworts gelöst werden, das der Benutzer vor dem Recherchenauftrag bestätigen muss, damit ein Betreiber des Kommunikationsnetzes und eventuell der Datenbank DB informiert wird und die Operation weiterhin zulässt. Eine Identifikation kann ebenfalls durch eine Erkennung wenigstens einiger Parameter der SIM-Karte des Mobiltelefons MP4 erfolgen. Weitere Identifikationsmittel wie biometrische Messsysteme können zu diesem Zweck auch eingesetzt werden.

Solche Identifikationsmittel können zusätzlich mit Zugriffsrechten verbunden werden und zwar einerseits hinsichtlich eines Zugriffs auf ein Kommunikationsnetz, wobei der Netzbetreiber weiss, falls das Mobiltelefon MP4 gestohlen wurde oder wenn der Benutzer sein maximales monatliches Telefonguthaben erreicht hat - und andererseits hinsichtlich eines Zugriffs auf beispielsweise private, geschützte oder kostenpflichtige Datenbanken.

Für die Recherche von Aufnahmedaten mit Metadaten (z.B. mittels einer Korrelation zwischen den Metadaten MD4 der Aufnahme IM4 aus dem Mobiltelefon MP4 mit weiteren Metadaten MD1, MD2, MD3 von Aufnahmen IM1, IM2, IM3 anderer Benutzer) wird der Recherchenauftrag erst im Server SE analysiert und angenommen oder abgelehnt. Eine Überprüfung eventueller Rechte eines Benutzers kann zusätzlich erfolgen. Optional werden dabei dem Benutzer die Kosten durch den Mobildienstanbieter (z.B. mit der Telefonrechnung) direkt verrechnet.

Nun kann das Recherchenergebnis dem Benutzer (Rechercheur) aus dem Server SE zum Mobiltelefon MP4 (download) zugeschickt werden. Das Sendeformat von gesuchten und aufgefundenen Bildern IM1, IM2, IM3 muss allerdings an die Anzeige-Mittel des Mobiltelefons angepasst werden. Dafür sollten Konvertierungsmittel entlang der Kette Serveur-Mobilfunknetz-Mobiltelefon vorhanden sein. Die Kenntnis im Server SE des richtigen Sende-Formats könnte ebenfalls z.B. aus dem verwendeten Format für den Recherchenauftrag oder aus einem Profil des am Server SE identifizierten Rechercheurs oder anhand von JINI- oder MEXE-Verfahren hergeleitet werden. Damit wird gesichert, dass keine Konvertierung erforderlich ist. Konvertierungsmittel können aber bei getrenntem Aufnahme- und Wiedergabegerät (z.B. Mobiltelefon MP4 mit Kamera und Computer PC mit Monitor) im Server SE oder in Endgeräten eingerichtet werden. Eine bevorzugte Einstellung des Benutzers kann ebenfalls berücksichtigt werden, so dass das gewünschte Format des downloads gewählt wird. Ferner kann durch eine automatische Überprüfung der Einstellmöglichkeiten des Mobilgeräts wie des Mobiltelefons MP4 des Benutzers das vor dem download auszuwählende Format eingestellt werden.

Wie für das "upload" der Metadaten MD4 (evtl. mit Aufnahmedaten IM4), erfolgt das "download" von Aufnahmedaten IM1, IM2, IM3, ... - mit teilkorrelierten Metadaten MD1, MD2, MD3, über ähnliche Wege, d.h. beispielsweise über MMS, E-Mail, FTP, WEB, WAP, etc., über ein Kommunikationsnetz wie u.a. GSM, GPRS, UMTS, HSCSD oder Internet. Wenn die Wiedergabe der aufgefundenen Bilder IM1, IM2, IM3, mittels eines Computermonitors mit Anschluss ans Internet möglich ist, kann der Server SE die Recherchenergebnisse in einer Internet-Seite zusammenfassen, z.B. zunächst als kleine Bilder, die per Maus-Klick als grössere Bilderformate angezeigt werden können.

Bei allen Upload- und Download-Operationen können Schutzrechte auf den Bildern eines Benutzers aus dem Server SE verwaltet werden. D.h. der Server SE kann mindestens einen Teil der Schutzrechte an den betroffenen Eigentümer eines oder mehrerer Bilder der Datenbank DB zurückgeben. Diese Rückgabe kann z. B. mittels finanzieller bzw. materieller Vorteile wie ein Telefonguthaben oder einen Zusatzspeicher erfolgen.

Zum Schutz einiger Aufnahmedaten können am Mobilgerät, am Computer oder am Server SE Schutzmittel wie z.B. DRM, Wassernamen (watername in Englisch) usw. verwendet werden. Auf dieser Weise können der Autor der Aufnahme, der Betreiber des Servers oder der Rechercheur die Verbreitung der (geschützten) Aufnahme steuern.

Recherchenkriterien (wie z. B. ein geographischer Standort) können als Metadaten in einer Metadatei einer Aufnahme vorgesehen werden. Dabei können zusätzlich zu Standortinformationen, d.h. unter anderem der Standort des Fotografs (z.B. in einer Weltkoordinatenform) eine Metadatei und mindestens eine weitere der folgenden Informationen (oder Metadaten) umfassen:
- einen Namen z. B. vom Standort bei der Aufnahme,
- einen Standort des aufgenommenen Gegenstands, der z.B. anhand des Standorts des Aufnahmegeräts, der Aufnahmerichtung ggf. mit Aufnahmebewegung und der Entfernung zum (bei der Bilderaufnahme fokussierten) Gegenstand ermittelt werden kann
- eine Zeit wie eine Jahrzahl, einen Monat, einen Tag und eine Uhrzeit,
- eine Aufnahmeneigenschaft der Aufnahmedaten wie Einstellparameter des Mobilaufnahmegerätes, Brennweite, Apertur, Belichtungszeit, usw. oder eine Aufnahmestellung oder -bewegung,
- eine Eigenschaft der Aufnahmedaten wie ein Farb- oder Formaspekt,
- ggf. eine weitere einstellbare Information des Mobilaufnahmegeräts wie eine Eigenschaft eines aufgenommenen Gegenstandes oder historische oder kulturelle Daten, Strassennummern, etc. Dafür sollen Mobilgeräte oder Computer die notwendigen Mittel aufweisen, damit solche Informationen automatisch ermittelt bzw. manuell eingegeben werden können.
- Eigenschaften aus Sensoren im oder in der Nähe des Mobilgeräts, zum Beispiel Temperatur-, Geschwindigkeit, Beschleunigung, medikalischen oder physiologischen Sensoren.

Zusätzliche Metadaten können hinzugefügt werden, Hauptsache ist, dass sie im Server SE korrekt ermittelt werden können.

Zeitliche Metadaten werden beispielsweise als Zeitstempel mittels einer elektronisch signierten Zeit in der Metadatei hergestellt. Die Zeit kann mit einer Uhr im Mobilgerät, im Mobilfunknetz oder aus GPS-Signalen ermittelt werden.

Als räumliche Information bei einer Bildaufnahme können unterschiedliche fotografische (Brennweite, Scharfstellung, Apertur des Objektivs, Typ der Kamera) sowie geometrische (positions- bzw. bewegungsbezogene Daten; Standort, Entfernung/Richtung der Kamera zum Gegenstand, etc.) verwendet werden. Mehrere Ermittlungssysteme solcher Parameter sind vorstellbar: Abstandsensoren, Navigationssysteme (GPS, Magellan, ...), gekoppelte Positionssensoren (zwei GPS), Netzbasierte Standortbestimmung durch Netzlokalisation des Handys (z.B. zwischen zwei Netzsendern oder/und -empfängern), etc.

Standortinformationen in den Metadaten können unterschiedliche Formate aufweisen. Es können einerseits ermittelte Weltkoordinaten (z.B. GPS-Koordinaten) sein, insbesondere wenn ein GPS-Messsystem in Verbindung mit dem Mobilgerät steht - z.B. bei jetzigen Mobiltelefonen oder durch eine Schnittstelle zwischen einem Handy und einem GPS-Gerät (wie beim Segeln, Fliegen, Autofahren oder Wandern, wobei viele Personen oft ein GPS-Gerät zusätzlich zu ihrem Handy verwenden). Dabei kann als Recherchenkriterium auch eine metrische Suchtoleranz eingesetzt werden, so dass die Wahrscheinlichkeit einer positiven Suche von Bildern gesteigert wird, insbesondere wenn die Datenbank DB wenige vorhandene Bilder in einem vom Rechercheur abgegebenen Umkreis des Mobilgeräts des Benutzers aufweist. Der Umkreis kann z.B. in Metern oder in Abhängigkeit eines geographischen Orts (wie ein Dorf, eine Stadt, etc.) vom Rechercheur definiert werden. Die Suchtoleranz kann entweder manuell vom Benutzer des Mobilgeräts oder automatisch eingestellt werden, so dass in diesem Fall mindestens ein Bild IM1 aufgefunden und am Mobiltelefon MP4 angezeigt wird. Solche variable Einstellungen von Suchkriterien sind besonders wichtig, falls sich z.B. ein Segler bei Nebel nahe von der Küste befindet und nur mittels seines Handys mit dem GPS-Gerät eine Sicht der Küste erhalten möchte. Auch bei einer Bergwanderung z.B. bei Unwetter oder Nebel ist eine Suche anderer Rettungswege durch eine Eingabe von einer anderen Position, Sichtpunkten, usw. wertvoll. In diesem Beispiel könnten die recherchierten Bilder sogar auch von in Echtzeit betriebenen Kameras (livecam) stammen, damit der Benutzer Wetterinformationen von einem beliebigen Standort sofort empfängt. Eine Echtzeit Recherche könnte auch aus dem Mobilgerät eingestellt werden, so dass bei regelmässigen Zeit- oder Streckenintervallen bei Bewegung des Benutzers neue Bilder mit aktualisierten Metadaten gesucht und angezeigt werden. Eine weitere einfache und praktische Anwendung wäre auch durch Einstellung gezielter Standort-Metadaten das Wetter, insbesondere über eine Fahrstrecke, abzufragen und selber feststellen zu können, ob gute Sicht für eine sichere Fahrt besteht oder ob Verkehrbehinderungen wie Staus zu erwarten sind.

Zusätzlich zu metrischen Koordinaten kann die Suche nach standortbezogenen Metadaten mit eingebundenen Namen (z.B. einer Ortschaft) vom Benutzer und/oder vom aufgenommenen Gegenstand erweitert werden. Auch bei einem Computer PC, insbesondere bei tragbaren Computern, können ferner Standort-Metadaten in einem Cookie vorgesehen werden.

Schliesslich sind im Allgemeinen viele interessante Anwendungen der vorliegenden Erfindung eine Hilfe zur Orientierung eines Benutzers, der keine direkte informative Sichtmöglichkeit hat.

Eine weitere Möglichkeit der Wiedergabe könnte mittels mehrerer Bilder, die z.B. von mehreren Benutzern zu unterschiedlichen Zeiten aufgenommen wurden, aus bekannten Standorten ein drei- oder pseudodrei-dimensionales Bildes am Computer-Monitor oder auf dem Display des Mobilgeräts darzustellen. Falls nun Bilder mehrerer Benutzer (d.h. mit mehreren Kameras an unterschiedlichen Orten) für einen selben sich bewegenden Gegenstand in Echtzeit aufgenommen werden, kann ebenfalls die drei-dimensionale Darstellung des "zusammengesetzten" Gegenstands dynamisch angezeigt werden.

Zur 3D-Zusammensetzung der Bilder soll eine Software im Mobilgerät, im Computer oder schon im Server SE vorhanden sein, die wenigstens die räumlichen Metadaten und eventuell die zeitlichen Metadaten als statische und dynamische Eingangsparameter der Zusammenfassung nutzen würde. Solche Echtzeit-Software sind heute Stand der Technik, z.B. für die Zusammensetzung von Kameraaufnahmen eines Skifahrers oder einer Fussballspiel-Szene aus unterschiedlichen Blickpunkten, wobei jede Kamera ein Navigationssystem und Mittel zur Bestimmung mehrerer Aufnahmeeigenschaften (Entfernung mit Erkennungspunkten, Richtung Kamera-Gegenstand-Achse, usw.) umfasst.

Als Recherchekriterium können als Metadaten im Ausführungsbeispiel gemäss Figur 1 die räumlichen Daten des Schlosses oder ein anderes Bild des Schlosses eingegeben werden, nachdem gemäss den Metadaten MD1, MD2, MD3 die drei Digitalbilder IM1, IM2, IM3 auf einem Computer PC oder einem Mobilgerät MP4 des vierten Benutzers angezeigt werden. Da hier die Metadatei MD1, MD2, MD3 einen zeitlichen Parameter aufweist, können die Digitalbilder IM1, IM2, IM3 als Filmwiedergabe chronologisch dargestellt werden. Es ist hier anzumerken, dass der Zugriff auf die Digitalbilder IM1, IM2, IM3 völlig frei von Zugriffsrechten erfolgt, d.h. alle Benutzer können ohne Absprache miteinander die Bilder anderer anonymer Benutzer auswählen. Auf gleiche Weise könnten Metadaten der Bilder IM1, IM2, IM3 unterschiedliche Entfernungen zwischen Kamera und Schloss aufweisen. In diesem Fall könnte der vierte Benutzer eine visuelle Zoom-Darstellung des Schlosses vornehmen.

Möglich ist aus, dass ein Benutzer ein Foto an einem Standort durch ein Foto der selben Szene an einem anderen Zeitpunkt ersetzt oder ergänzt, etwa um ein wolkiges Landschaftsbild durch ein sonniges Bild eines anderen Benutzers zu ersetzen.

Selbstverständlich kann der Benutzer eines Mobilgeräts lediglich eine Herunterladung (download) anhand einer gewünschten Metadatei (metadata upload) aus dem Mobilgerät ohne Übertragung eines weiteren Bildes (data upload) bis zum Speichermedium durchführen. In diesem Fall kann die Metadatei Standortparameter des aktuellen Standorts des Benutzers aufweisen. Damit merkt er deutlicher, ob er sich an der richtigen Stelle befindet, falls ihm dort z.B. keine Hausnummer oder Schilder zur Verfügung stehen. Damit ist eine Suche von wichtigen Informationen mittels gewünschter Metadaten einfach und schnell. Weitere Kriterien können zu den Metadaten hinzugefügt bzw. davon entfernt werden, falls eine Recherche eines Bildes präziser oder breiter erfolgen soll. Zusätzlich zu den räumlichen und zeitlichen Parametern kann als Beispiel eine Farbe oder ein Name eingegeben werden. Anhand dieser weiteren Kriterien werden andere Metadateien überprüft, so dass der Benutzer eine nützliche Information erhält.

Hier war die Rede von Digitalbildern IM1, IM2, IM3, die als Aufnahmedaten mittels einer Kamera eines Mobilgeräts vorgesehen sind. Es können aber auch Videos oder Tondaten aufgenommen werden, die auf dem Server SE ein upload erfahren haben und bei der Datenbank DB gespeichert werden.

Damit ist auch vorstellbar, dass mehrere Benutzer ihre Aufnahmedaten mit den Metadaten in Alben oder Partitionen eines Servers (vorzugsweise eines Servers beim Mobilfunkbetreiber) speichern. Bei Freigabe der Aufnahmedaten (d.h. bei freiem Zugriffsrecht durch andere Benutzer) könnte der Betreiber dem freigebenden Benutzer zur Steigerung der Attraktivität eine Belohnung anbieten.

Zusammengefasst kann ein System mit folgenden Merkmalen die Vorrichtungsaspekte der Erfindung in Verbindung mit einem Mobilfunknetzbetreiber umfassen:
- Eine Datenbank DB zur Ablage und Zuordnung von mehreren, Metadaten aufweisenden, Aufnahmedaten, die gewisse Aufnahmedaten IM1, IM2, IM3, ... mit Metadaten MD1, MD2, MD3, ... von unterschiedlichen Benutzern aufweisen,
- Ein Mobilaufnahmegerät MP4 eines ersten Benutzers, das über ein Mobilfunknetz MN mit der Datenbank DB verbunden ist,
- Ein Metadatenerzeugungsmodul zur Erzeugung einer ersten Metadatei MD4 bei einer Aufnahme IM4, die mindestens eine Standortinformation der Aufnahme IM4 aufweist,
- Ein Datenverwaltungssystem COR, zu dem die Standortinformation der Aufnahme IM4 als Kriterium zur Suche anderer Aufnahme IM1, IM2, IM3, ... weiterer Benutzer in der Datenbank DB aufgeführt ist.

Besteht eine Teilkorrelation (nicht alle Metadaten müssen korreliert sein, aber ein Teil davon) zwischen der Metadaten MD4 des ersten Benutzers und den Metadaten MD1, MD2, MD3, ... anderer Benutzer, ist weiterhin ein download der Bilder IM1, IM2, IM3, ... eventuell mit Metadaten MD1, MD2, MD3, ... zum Mobilgerät wie dem Mobiltelefon MP4 möglich.

Zum Empfang von den ab der Datenbank DB ausgehenden anderen Aufnahmedaten IM1, IM2, IM3, ... ist ein Wiedergabegerät MP4, PC über ein Kommunikationsnetz, vorzugsweise das Mobilfunknetz MN, mit dem Datenverwaltungssystem COR verbunden. Das Datenverwaltungssystem COR und die Datenbank DB können in einem Server SE integriert sein.

Mit dem Datenverwaltungssystem COR oder allgemeiner mit dem umfassenden Server SE ist ein Wiedergabegerät MP4, PC für die Aufnahmedaten IM1, IM2, IM3, ... mit teilkorrelierten Metadaten MD1, MD2, MD3, ... über ein Kommunikationsnetz (vorzugsweise das Mobilfunknetz MN) verbunden. Mit anderen Worten weist das Mobiltelefon MP4 ein LCD-Display zur Anzeige der Aufnahmedaten IM1, IM2, IM3,... auf, mit welchem eine 2D oder 3D-Darstellung aus den Bildern IM1, IM2, IM3, ... hergestellt wird.

In diesem Fall handelt es sich um ein Mobilaufnahmegerät und ein Wiedergabegerät, die in einer einzelnen Mobilkommunikationsvorrichtung wie einem Mobiltelefon, einer Kamera, einem elektronischen Organizer (PDA) integriert sind. Es können auch physikalisch getrennte Mobilaufnahmegeräte (Kamera mit getrenntem GPS) und Mobilwiedergabegeräte (PC-Monitor) sein, die beispielsweise mittels einer Funk-, Infrarot- oder Bluetooth-Schnittstelle für die Übertragung der Aufnahmedaten verbunden sind. Eine weitere Mobilfunknetzverbindung zwischen der Kamera und dem Server SE sollte vorhanden sein. Dazu könnten die Daten der Kamera an den Computer PC weitergeleitet werden und für den Recherchenauftrag per E-Mail weiter zum Server SE geleitet werden.

Ein weiteres Problem für einen Benutzer eines Mobilgeräts könnte entstehen, falls am Ort seiner Aufnahme kein Mobilfunknetzempfang seines Handys für eine Bildsuche möglich ist. Eine Lösung dazu wäre, wenn der Benutzer vor Ankunft an diesem Ort (beim Mobilfunknetzempfang) seine voraussichtlichen räumlichen Reisenziele in annähernder Weise geplant hat, d.h. eine vorrausichtliche Recherche mit mindestens einer etwas breitbandigen Metadatei durchgeführt hat, welche Metadaten des Standortes unter einer bestimmten Suchtoleranz der Reiseziele (z.B. in einer Umgebung von 2km) enthält. Die in der Datenbank aufgefundenen Bilder könnten in einem Speichermodul in Verbindung mit dem Handy gespeichert werden. Eine Alternative wäre, dass der Mobilfunknetzbetreiber ein Speichermedium oder eine Speichermenge mit vorgespeicherten Bildern, die eine Umgebung eines gewünschten Reisezieles umfassen, herstellt und dem Benutzer vor seiner Abreise z.B. als CD, Memory-Stick, "Compact Flash"-Karte oder einfach per Versendung an die E-Mail-Adresse des Benutzers verkauft. Aufgrund einer hohen Menge von Daten wäre ein Speichermodul mit einer Mobilkommunikationsvorrichtung am günstigsten zu verbinden, welche eine Gruppe von Aufnahmedaten und Metadaten aus der Datenbank aufweist.

Nun stellt sich auch die Frage, wie ein solches System mit Kostenabrechnungen verwaltet wird. So könnten am einfachsten alle Kosten vom einen Kommunikationsdienstanbieter (wie einen Mobilfunknetz- und/oder Festnetzbetreiber) zentral verwaltet werden. Auch wenn der Betreiber des Servers SE und der Datenbank DB nicht dem Kommunikationsdienstanbieter gehören, könnte ein finanzielles Abkommen abgeschlossen werden.

Hier wird also mehr der Aspekt "Bedarf oder Leistung" des Benutzers gegenüber dem Kommunikationsdienstanbieter beschrieben.

Einerseits nutzt der Benutzer die Suche von Aufnahmedaten über das Kommunikationsnetz lediglich als Kunde. Dabei können ihm die Kosten der Übertragung von Aufnahmedaten mit Metadaten tariflich als Telefongebühr verrechnet werden (je nach Zeit oder Speichermenge - insbesondere bei Rücksendung von vielen Aufnahmedaten mit teilkorrelierten Metadaten). Auch die Recherche im Server SE könnte vom Kommunikationsdienstanbieter finanziell pauschal oder abgestuft nach Aufwand oder Anzahl der Suchergebnisse unterstützt werden. Die Übertragungskosten der Suchergebnisse zum Rechercheur können dazu über ein verrechnetes MMS übernommen werden. PrePaid-Karte und PostPaid-Karte könnten auch belastet werden.

Andererseits dient der Benutzer der Gestaltung der Datenbank DB beim Ablegen von Aufnahmedaten gemäss bestimmter Metadaten. In diesem Fall kann er bei Teilung seiner Schutzrechte mit dem Kommunikationsdienstanbieter und der Datenbank eine Belohnung erhalten, die z.B. als Geld- oder Telefonguthaben oder freien Zusatzspeicher vorgesehen sein kann. Besitzt dieser Benutzer-Gestalter noch einen Teil der Schutzrechte auf seinen Aufnahmedaten, kann er mit weiteren Betreibern ein Geschäft abschliessen.

Nun kann eine Metadatei auch Identifizierungsparameter als Metadaten aufweisen, derart dass ein Zugriff auf gespeicherte Bilder in einer Datenbank nicht mehr anonym erfolgt oder nur unter bestimmten eigenen Rechtsbedingungen ermöglicht wird. Dieser Aspekt kann zu einem finanziellen Vorteil führen, falls der Eigentümer gebührpflichtige Bilderzugriffe weiteren Benutzern anbieten möchte.

Es können auch beliebige anonyme Benutzer einer Datenbank ihre Bilder anhand ihrer Metadatei dort speichern und (wenn gestattet) auf weitere Gruppen von Bildern (gemäss z.B. räumlichen und zeitlichen Metadaten von Metadateien) zugreifen, die von verschiedenen Benutzern für einen Gegenstand aufgenommen und schon früher in der Datenbank gelagert wurden. Bei Auswahl und Verbindung dieser Bilder mittels ihrer Metadatei kann eine Zusammensetzung dieser Bilder (z.B. als chronologischer Film) hergestellt werden. Es können aber auch beispielsweise Panorama-Szenen aus mehreren Bildern (vorzugsweise von mehreren Benutzern) erzeugt werden. Stellt dabei ein Fotograf eine Lücke in seinen Panorama-Bildern zu spät fest, kann er immerhin auf zusätzliche Aufnahmen (mit annähernden Metadaten) anderer Leute zugreifen. Grafische Software ermöglichen z.B. eine Panorama-Darstellung mit überlappenden Bildern, in denen Farbe und geometrische Aspekte der Bilddaten retouchiert werden können. Es können auch zusätzliche drei-dimensionale Darstellungen mit wenigstens zwei Bildern des Gegenstandes erzeugt werden.

Aus Sicht des heutigen Stands der Technik weisen viele Mobilgeräte wie Handys, PDAs, Uhren, etc. integrierte digitale Kameras auf. In Verbindung mit einem Standortbestimmungsmittel können solche Metadaten erzeugt werden. Damit können derartige Metadateien auf einfache Art von mehreren Benutzern erzeugt werden, die nach ihren Aufnahmen ihre Bilder z.B. auf einen gemeinsamen Server bei einem Dienstanbieter mit Recherchen-Tool speichern können. Zeitlich und räumlich zugeordnete Bilder aus mehreren Quellen sind damit für jeden verfügbar und zu verbinden. Anstelle eines zentralen Servers in einem Netzwerk kann auch ein Peer-to-Peer-Netz von Servern für die Ablage der Aufnahmen vorgesehen werden. Eine dazugehörige Peer-to-Peer-Zahlung soll hier noch betrachtet werden.

Anschliessend wird also eine Mobilkommunikationsvorrichtung MP4 mit wenigstens einem Aufnahmegerät und einem Wiedergabegerät beschrieben, die für Aufnahmedaten IM4 mit Metadaten MD4 bzw. Wiedergabedaten IM1, IM2, IM3 mit Metadaten MD1, MD2, MD3 geeignet sind, wobei gewisse Metadaten eine Standortinformation aufweisen. Dabei werden erfindungsgemäss Metadaten-basierte Recherchedaten aus dem Aufnahmegerät eines ersten Benutzers zu einem Datenverwaltungssystem COR mit einer Datenbank DB geführt. Metadaten-basierte Aufnahmedaten von anderen Benutzern der Datenbank DB bilden Suchergebnisse zu den Recherchendaten, die dem Wiedergabegerät des ersten Benutzers zurückgeführt werden.

Das Aufnahmegerät kann automatische Metadatenerzeugungsmittel (wie ein internes oder ein aus dem Mobilfunknetz bezogenes Navigations- und/oder Orientierungssystem, einen Zeitstempel oder andere beliebige Datum- und Zeiterzeugungsmittel, usw.) umfassen oder mit diesen Mitteln verbunden sein.

Das Aufnahmegerät umfasst ebenfalls manuell einstellbare Metadatenerzeugungsmittel wie elektronische Eingabemittel für einen Namen, eine Position, usw. Dies kann durch Eingabe mittels der Tastatur eines Mobiltelefons erfolgen. Allgemeiner handelt es sich um ein Eingabemodul zur Charakterisierung von Metadaten bei einer Benutzer-basierten Auswahl von gewissen Metadaten. Es kann also z.B. eine Software-unterstützte Oberfläche sein, die aus einem Menü Metadaten abfragt.

Seitens des Wiedergabegeräts können mehrere Darstellungsmittel für die importierten Aufnahmedaten zur Verfügung stehen, die z.B. eine zeitliche Reihenfolge (Filme) oder unterschiedliche 2D- bis 3D-Zusammensetzungen (Landkarten, Häuser, ...) von Aufnahmedaten anhand ihrer Metadaten ermöglichen. Die Darstellungsmittel können Bildschirme, Bildprojektoren, Mikrofone oder andere Wiedergabegeräte sowie entsprechende Software zur Steuerung dieser Wiedergabegeräte umfassen.

Ein Interpretierungsmodul das je nach Metadaten eine Software-basierte Oberfläche der Wiedergabe initiiert, wird zur Erkennung von wiederzugebenden Aufnahmedaten verwendet,.

Das Datenverwaltungssystem COR kann auch aus Software-basierten Oberflächen der Mobilkommunikationsvorrichtung gebildet sein und die Datenbank DB in einem Speichermodul in der Mobilkommunikationsvorrichtung integriert sein oder daran angeschlossen werden. Mit anderen Worten kann z.B. ein Mobiltelefon alle erfindungsgemässen Aufnahme-, Such-, Wiedergabefunktionen ohne obligatorischen Durchgang über ein Mobilfunknetz sammeln, indem ein Benutzer vor einer Suche gemäss gewünschten Metadaten viele Bilder aus einer Datenbank eines Betreibers heruntergeladen hat oder beim Betreiber eine Sammlung von Bildern nach bestimmten Metadaten bestellt hat. Diese Bilder können für einen nachträglichen Suchbedarf des Benutzers in seinem Mobiltelefon gespeichert werden oder mittels eines am Mobiltelefon angeschlossenen Speichermoduls durchsucht werden. Diese Speicher-Anwendung ist besonders interessant, falls ein Benutzer eine Reise an einen Ort vorhat, wo der Netzempfang gering oder null ist.

Zur Suche anhand von erwünschten Metadaten (Standort, Zeit, Name des Orts, Hauptfarbe eines Gegenstands,...) ist dem Aufnahmegerät ein Abfragemodul zur Auswahl von Arten der Metadaten angeschlossen. Auch hier kann noch die Tastatur eines Mobiltelefons dafür verwendet werden.

Letztendlich besteht die Möglichkeit, an der Mobilkommunikationsvorrichtung mindestens einen Teil der Datenbank, vorzugsweise mit vom Rechercheur erwünschten Daten, als Speichermodul (RAM, Compact-Flash, ...) zu integrieren oder (per Memory-Stick via USB, Festplatte, CD-ROM, ...) anzuschliessen.

## Patentansprüche

1. Verfahren zur Suche von digitalen Aufnahmedaten, vorzugsweise Kamerabildern, in einer Datenbank (DB),
wobei Aufnahmedaten von einer Vielzahl von Benutzern über ein Telekommunikationsnetz in die benannte Datenbank (DB) abgelegt werden,
wobei mindestens gewisse Aufnahmedaten mit Mobilaufnahmegeräten aufgenommen werden,
wobei in der Datenbank Metadaten (MD1, MD2, MD3, ...) mindestens zu gewissen Aufnahmedaten (IM1, IM2, IM3, ...) von Benutzern zugewiesen sind
wobei die Metadaten (MD1, MD2, MD3, ...) eine automatisch ermittelte Standortinformation enthalten,
**dadurch gekennzeichnet,**
**dass** mittels eines Mobilaufnahmegerätes (MP4) eine Standortinformation als Suchkriterium von einem ersten Benutzer für die Suche von Aufnahmedaten (IM1, IM2, IM3, ...) unterschiedlicher Benutzern in der Datenbank (DB) verwendet wird.

2. Verfahren nach Anspruch 1,
**dadurch gekennzeichnet,**
**dass** die benannte Standortinformation den Standort des benannten Mobilaufnahmegeräts angibt.

3. Verfahren nach einem der Ansprüche 1 bis 2,
**dadurch gekennzeichnet,**
**dass** die benannte Standortinformation einen Standort eines aufgenommenen Gegenstands angibt, der z.B. anhand des Standorts des Mobilaufnahmegeräts, einer Aufnahmerichtung zum Gegenstand ggf. mit Aufnahmebewegung und - bei fokussierter Bilderaufnahme - der Entfernung zum Gegenstand ermittelt werden kann,
oder anstelle des Standorts des aufgenommenen Gegenstands mindestens einen anderen vom Benutzer definierten Standort angibt.

4. Verfahren nach einem der Ansprüche 1 bis 3,
**dadurch gekennzeichnet,**
**dass** die benannte Standortinformation als geographischen Koordinaten angegeben werden.

5. Verfahren nach einem der Ansprüche 1 bis 3,
**dadurch gekennzeichnet,**
**dass** die benannte Standortinformation im Mobilfunknetz ermittelt wird.

6. Verfahren nach einem der Ansprüche 1 bis 3,
**dadurch gekennzeichnet,**
**dass** die benannte Standortinformation geographische Standortsnamen, die automatisch anhand von geographischen Koordinaten ermittelt werden, umfasst.

7. Verfahren nach einem der Ansprüche 1 bis 3,
**dadurch gekennzeichnet,**
**dass** zur benannten Standortinformation zusätzliche Standortinformationen, wie Strassennamen oder -nummern, ein Umkreis von Orten oder eine Zone um einen geographischen Punkt, manuell vom Benutzer im Mobilaufnahmegerät eingegeben werden.

8. Verfahren nach einem der vorhergehenden Ansprüche,
**dadurch gekennzeichnet,**
**dass** zusätzlich zu den Standortinformationen die Metadaten mindestens einer Aufnahme mindestens einer der weiteren folgenden Informationen umfassen:
- einen Namen z.B. von einer Benutzergruppe der Datenbank, vom Fotograf, usw.
- eine Zeit wie eine Jahrzahl, einen Monat, einen Tag, eine Uhrzeit,
- eine Aufnahmeeigenschaft der Aufnahmedaten wie Einstellparameter des Mobilaufnahmegerätes wie Brennweite, Apertur, Belichtungszeit, usw. oder eine Aufnahmestellung oder -bewegung,
- eine Eigenschaft der Aufnahmedaten wie einen Farb- oder Formaspekt,
- ggf. eine weitere einstellbare Information des Mobilaufnahmegeräts wie eine Eigenschaft eines aufgenommenen Gegenstands oder historische oder kulturelle Daten, etc.

9. Verfahren nach einem der vorhergehenden Ansprüche,
**dadurch gekennzeichnet,**
**dass** die Standortinformation der Metadaten mittels eines Positionsbestimmungsmittels wie eines GPS oder netz-basierten Lokalisationsmitteln ermittelt werden.

10. Verfahren nach einem der vorhergehenden Ansprüche,
**dadurch gekennzeichnet,**
**dass** Aufnahmedaten Videobilder oder Tonsequenzen enthalten.

11. Verfahren nach einem der vorhergehenden Ansprüche,
**dadurch gekennzeichnet,**
**dass** an einem mit der Datenbank verbundenen Wiedergabegerät eine - vorzugsweise Software-unterstützte - Wiedergabe einer Gruppe von Aufnahmen mit teilkorrelierten Metadaten gemäss einer der Metadaten - d. h. als räumlicher, alphabetischer, chronologischer Wiedergabeverlauf oder als zwei bis drei- dimensionales Panorama der Aufnahmen - erfolgt.

12. Verfahren nach Anspruch 11,
**dadurch gekennzeichnet,**
**dass** durch Vergleich von sich annähernder Bereichen zwischen Aufnahmedaten eine Zusammensetzung der Aufnahmedaten wie ein Panorama hergestellt wird.

13. Verfahren nach einem der vorhergehenden Ansprüche,
**dadurch gekennzeichnet,**
**dass** zwischen der Datenbank und einem Mobilgerät zur Aufnahme und/oder Wiedergabe von Aufnahmedaten ein Mobilfunknetzdienstanbieter die Übertragungskosten der Aufnahmedaten und Metadaten einem Benutzer verrechnet.

14. Verfahren nach einem der vorhergehenden Ansprüche, **dadurch gekennzeichnet,**
**dass** der Datenbankbetreiber Speicher- und Verwaltungskosten der Aufnahmedaten und Metadaten dem Benutzer zur Ablage oder zur nach der Suche erwünschten Herunterladung von Aufnahmedaten verrechnet.

15. Verfahren nach einem der Ansprüche 13 bis 14,
**dadurch gekennzeichnet,**
**dass** aufgrund technischer Leistungen des Mobilfunknetzdienstanbieters und der Datenbankbetreiber ein finanzielles Abkommen zwischen denselben durch eine verbilligte Telefonrechnung oder/und andererseits durch ein höheres Speicherangebot besteht.

16. Verfahren nach einem der Ansprüche 13 bis 15,
**dadurch gekennzeichnet,**
**dass** einem Benutzer, der als Auftragnehmer mit Aufnahmedaten und Metadaten der Gestaltung der Datenbank dient, eine Belohnung, vorzugsweise als privater Zusatzspeicherplatz und/oder Telefonguthaben, abgegeben wird.

17. Verfahren nach einem der Ansprüche 13 bis 16,
**dadurch gekennzeichnet,**
**dass** einem Benutzer, der einen Teil der Datenbank mit privaten Aufnahmedaten und Metadaten gestaltet und wenn möglichst viele weitere Benutzer seine privaten Aufnahmen und Metadaten in der Datenbank suchen und eventuell zu sich herunterladen, eine Belohnung, vorzugsweise als privater Zusatzspeicherplatz beim Datenbankbetreiber und/oder Telefonguthaben beim Mobilfunknetzdienstanbieter geschenkt werden.

18. Verfahren nach einem der Ansprüche 1 bis 17,
**dadurch gekennzeichnet,**
**dass** auf in der Datenbank abgelegte Aufnahmen eines Benutzers Zugriffsrechte zur Herunterladung dieser Aufnahme durch weitere Benutzer gewährt werden.

19. Verfahren nach einem der Ansprüche 1 bis 18,
**dadurch gekennzeichnet,**
**dass** zwischen einem Mobilgerät und der Datenbank Aufnahmedaten und Metadaten mit unterschiedlichen Datentypen für Bilder, Videos oder Töne wie *.jpeg, *.mpeg, *.raw, *.wav, *.gif, usw. über verschiedene Kanäle wie WEB-, WAP, etc., als integrierter Teil von E-Mail, MMS, usw. und über Kommunikationsnetze GSM, UMTS, Internet, Bluetooth, etc. übertragen werden können und
**dass** beim Herunterladen von Aufnahmedaten und Metadaten ins Mobilgerät entsprechende Konvertierungsmittel ausserhalb der Datenbank ggf. den vom Mobilgerät erforderlichen Format anpassen.

20. System mit folgenden Merkmalen:
Eine Datenbank (DB) zur Ablage und Zuordnung von mehrere Metadaten aufweisenden Aufnahmedaten, die gewisse Aufnahmedaten (IM1, IM2, IM3, ...) mit Metadaten (MD1, MD2, MD3, ...) von unterschiedlichen Benutzern aufweisen,
Ein Mobilaufnahmegerät (MP4) eines ersten Benutzers, das über ein Mobilfunknetz (MN) mit der Datenbank (DB) verbunden ist,
Ein Metadatenerzeugungsmodul zur Erzeugung einer ersten Metadatei (MD4) bei einer Aufnahme (IM4), die mindestens eine Standortinformation der Aufnahme (IM4) aufweist,
**gekennzeichnet durch**
ein Datenverwaltungssystem (COR), zu dem die Standortinformation der Aufnahme (IM4) als Kriterium zur Suche anderer Aufnahmen (IM1, IM2, IM3, ...) weiterer Benutzer in der Datenbank (DB) geführt wird.

21. System nach Anspruch 20,
**dadurch gekennzeichnet,**
**dass** zum Empfang von den der Datenbank (DB) ausgehenden anderen Aufnahmedaten (IM1, IM2, IM3, ...) ein Wiedergabegerät (MP4, PC) über ein Kommunikationsnetz, vorzugsweise das Mobilfunknetz (MN), mit dem Datenverwaltungssystem (COR) verbunden ist.

22. System nach Anspruch 21,
**dadurch gekennzeichnet,**
**dass** Mobilaufnahmegerät und Wiedergabegerät in einer einzelnen Mobilkommunikationsvorrichtung wie einem Mobiltelefon, einer Kamera, einem PDA integriert sind.

23. System nach einem der Ansprüche 20 bis 22,
**dadurch gekennzeichnet,**
**dass** mindestens eine Abrechnungseinheit im Mobilfunknetz (MN) für die Kosten der Ablage von Aufnahmedaten in der Datenbank und die Kosten der Übertragung von Aufnahmedaten und/oder Metadaten zwischen dem Mobilaufnahmegerät und der Datenbank und ggf. zwischen der Datenbank und dem Wiedergabegerät vorgesehen ist.

24. Mobilkommunikationsvorrichtung (MP4) mit wenigstens einem Aufnahmegerät und einem Wiedergabegerät, die für Aufnahmedaten (IM4) mit Metadaten (MD4) bzw. Wiedergabedaten (IM1, IM2, IM3) mit Metadaten (MD1, MD2, MD3) geeignet sind,
wobei gewisse Metadaten eine Standortinformation aufweisen,
**dadurch gekennzeichnet,**
**dass** Metadaten-basierte Recherchedaten aus dem Aufnahmegerät eines ersten Benutzers zu einem Datenverwaltungssystem (COR) mit einer Datenbank (DB) geführt werden,
**dass** Metadaten-basierte Aufnahmedaten von anderen Benutzern der Datenbank (DB) Suchergebnisse zu den Recherchedaten bilden, die dem Wiedergabegerät des ersten Benutzers zurückgeführt werden.

25. Mobilkommunikationsvorrichtung nach Anspruch 24,
**dadurch gekennzeichnet,**
**dass** das Aufnahmegerät mit automatischen Metadatenerzeugungsmitteln wie einem internen oder einem aus einem Mobilfunknetz bezogenen Navigations- und/oder Orientierungssystem, einem Zeit- oder Datumserzeugungsmittel, usw., in Verbindung ist oder sie umfasst.

26. Mobilkommunikationsvorrichtung nach einem der Ansprüche 24 bis 25,
**dadurch gekennzeichnet,**
**dass** das bzw. die Aufnahmegeräte manuell einstellbare Metadatenerzeugungsmittel wie elektronische Eingabemittel für einen Namen, eine Position, usw., umfassen.

27. Mobilkommunikationsvorrichtung nach Anspruch 26,
**gekennzeichnet durch**
ein Eingabemodul zur Charakterisierung von Metadaten bei einer Benutzer-basierten Auswahl von gewissen Metadaten.

28. Mobilkommunikationsvorrichtung nach einem der Ansprüche 24 bis 27,
**dadurch gekennzeichnet,**
**dass** das Wiedergabegerät mehrere Darstellungsmittel für die importierten Aufnahmedaten aufweist, die eine zeitliche Reihenfolge oder unterschiedliche 2D- bis 3D-Zusammensetzungen von Aufnahmedaten anhand ihrer Metadaten ermöglicht und
**dass** die Darstellungsmittel Bildschirme, Bildprojektoren, Mikrofone oder andere Wiedergabegeräte sowie entsprechende Software zur Steuerung dieser Widergabegeräte umfassen.

29. Mobilkommunikationsvorrichtung nach Anspruch 28,
**gekennzeichnet durch**
ein Interpretierungsmodul zur Erkennung von wiederzugebenden Aufnahmedaten, wobei dieses Modul je nach Metadaten eine Software-basierte Oberfläche der Wiedergabe initiiert.

30. Mobilkommunikationsvorrichtung nach einem der Ansprüche 24 bis 29, **dadurch gekennzeichnet, dass** das Datenverwaltungssystem (COR) als Software-basierte Oberfläche der Mobilkommunikationsvorrichtung gebildet ist und die Datenbank (DB) in einem Speichermodul in der Mobilkommunikationsvorrichtung integriert oder angeschlossen ist.
